# EUROPEAN PATENT APPLICATION

(11) **EP 2 012 461 A1**
(43) Date of publication of application: **07.01.2009**
(21) Application number: 07013142.0
(22) Date of filing: 04.07.2007
(51) Int. Cl.: H04L 12/18

(54) **Multicast network system**

(71) Applicant: Nokia Siemens Networks Oy, 02610 Espoo (FI)
(72) Inventor: Godor, Istvan, 1039 Budapest (HU); Kalletner, Franz, 4880 St. Georgen im Attergau (AT); Kovacs, Akos, 1014 Budapest (HU)
(74) Representative: Schober, Ralf Stefan

(57) **Abstract**

The invention relates to a multicast network system comprising a core network (16) with at least one core network router (10), wherein the core network router (10) is configured to transmit a transmittable number of layers of at least one layered medium to at least one receiving unit (62, 64, 66) in an access network (68) connected to said core network (16), and further comprising a resource control mechanism for determining the number of layers depending on available bandwidth resources of the multicast network system

It is proposed that said resource control mechanism is comprised by the core network (16).

## Description

### 1. Technical Field

The invention relates to a multicast network system comprising a core network and an access network and to a method for operating a multicast network system.

### 2. Background of the Invention

In multicast network systems, layered media are transmitted to multiple users being subscribed to the corresponding media. The user-perceived media quality depends on the number of layers received and on the quality properties of the layered media. The layered media to be multicast typically consists of one base layer and a number of additional enhancement layers each providing progressive quality improvement.

In order to avoid data overflow in the network, advantage has to be taken of the media's scalability in network management. The media layer information of the packets has to be available for lower network layers by cross-layer information forwarding techniques. Based on this information, specific resource management functions can provide the required Quality of Service (QoS) for the layered media.

These functions can be split into two main parts. The first part is for reserving the required bandwidth for the media to be sent either to a single or to a group of receivers. The second part is for managing the transmittable number of layers of the media according to the network conditions like available bandwidth especially in case of congestion. This part is referred to as Cross-Layer Resource Control (CL-RC).

In the simplest form of layer management, only the most important layers of the media are protected in case of congestion by using a priority queue with the appropriate priority settings of the layers. This solution does not assume any control loop, thus the sender may inject layers into the network in vain. The heterogeneity of receivers engenders heterogeneous perceived qualities, such that different numbers of required layers for each receiver may be necessary. These layers can cause severe and permanent congestion.

The existing solutions for layered media delivery control need compromise between their efficiency and their simultaneous handling of IP Backbones (IP-BBs) and access networks (ANs).

Moreover, the state-of-the-art solutions are receiver driven, so they are not able to react fast to temporary and short term congestions due to the longer signaling path delays. Since an Internet Group Management Protocol (IGMP) is used to control the received multicast groups, extra delay to the reaction time is added. This delay limits the applicability of current solutions for e.g., real-time multimedia delivery.

One of the main challenges for layered multicast media systems is how to support heterogeneous receivers. In order to assure that each of them receive the media at the highest quality, the appropriate number of layers should be sent to each user. Without any controlling procedure, low-capacity regions of the network can easily suffer congestion while high-capacity regions are under-utilized. In order to cope with this problem, the controlling schemes are deployed at the receiver in the current solutions. Thus the state-of-the-art control methods are receiver-driven methods, where the main intelligence is mainly centralized at the end-user side.

Currently, layered media is distributed in the network by sending each layer to a given multicast group address. The main idea of each prior art solution is that if the receiver detects unused bandwidth, then it signs up for a higher layer. If the receiver detects congestion, then it simply drops the highest layer of the received media. Joining and leaving to a given group is almost always controlled by Internet Group Management Protocol (IGMP).

One solution for congestion controlled layered multicast is the Receiver Driven Layered Multicast (RLM). RLM uses receiver-initiated subscriptions (i.e., joins and leaves) of the distributed layers according to their capabilities. Each receiver performs periodical join-experiments by joining to a higher layer and meanwhile if loss is detected, then they fall back to the previous quality. However, the join-experiments of a host can cause packet loss for other hosts behind the same bottleneck.

The above problem was solved by the Receiver Driven Layered Control (RLC) protocol. RLC uses synchronized join-experiments, with defined synchronization points placed into packets by the sender. Receivers can add a given layer after the appropriate synchronization point of the given layer. Protocol latency is brought by the used IGMP at the end-host side. So in a congested network, fast reaction cannot be performed. The network may remain in the congested state if no care is taken to the unnecessary over-subscriptions. Therefore, the RLC periodically injects bursts of packets in each layer prior to the synchronization points. A burst in a layer simulates as if the receiver was subscribed to the next higher layer. However, if the probing period is not long enough, the solution does not ensure that signing up to a higher layer is safe (and does not cause packet loss).

The Fair Layered Increase/Decrease with Dynamic Layering (FLID-DL) uses a dynamic layering technique in which the sender periodically decreases the bit rate of each layer in order to eliminate the leave latency introduced by the IGMP protocol. With this technique, no leave action and synchronization is needed. In order to receive the same or higher quality media, the user has to send a join message. FLID-DL generalizes the RLC protocol and eliminates some of its complexity such as the join-experiments and the packet-burst probing phases. Note, that FLID-DL brings complexity to the sender as it should be able to decrease the bit rate of a given layer assigned to a certain multicast group.

In Sender-adaptive and Receiver-driven Layered Multicast (SARLM), each receiver dynamically monitors the network conditions, estimates the available bandwidth and decides whether to join a higher layer, stay or leave the current one. The sender periodically multicasts a feedback request. Based on the replies of the request the sender explicitly classifies the receivers into receiving groups and for each group, the sender adjusts the sending rate as well. For bandwidth estimation, the packet-pair method is used similarly to RLC, but gives quantitative results of the measurement.

The main disadvantage of current resource control protocols is the leave latency caused by the IGMP protocol, which is needed if access networks and IP Backbones are jointly managed. Also note, that due to the latter fact short term, fast and frequent local adaptation is not possible at all either in wired or in wireless scenario. If end-to-end feedback is used, the adaptation capabilities are even worse. For free bandwidth estimation, almost all proposed solutions use packet-burst periods. These periods are initiated by the sender and can lead to unwanted and unnecessary loss and put burden to the whole transmission path in vain. Joint handling of access networks and IP Backbones can be complex and difficult. By the proposed split up of the resource management into core and access part, optimal quality can be provided for each access network.

### 3. Summary of the Invention

In view of the above problems of the prior art, the object of the invention is to provide a multicast network system and a method for operating such a multicast network system with enhanced flexibility, wherein in particular the injection of superfluous layers in the core network is avoided.

The above problems are solved by multicast network system and a method for operating such a multicast network system according to the independent claims.

According to one aspect of the invention, a multicast network system comprising a core network with at least one core network router is proposed. The core network router is configured to transmit a transmittable number of layers of at least one layered medium to at least one receiving unit in an access network connected to said core network. The multicast network system is further comprising a resource control mechanism for determining the number of layers depending on available bandwidth resources of the multicast network system.

In order to allow for a more flexible layer control, it is proposed that the resource control mechanism is comprised by the core network. The access network may be provided with a suitable resource control mechanism working largely independent of the resource control mechanism of the core network.

By splitting up core network (IP-BB) and access network with regard to the layer control, for each part an appropriate control scheme can be developed without the unavoidable tradeoffs and compromises of the existing solutions. For the core network or the IP-Backbone, the invention proposes a general solution by improving today's state-of-the-art solutions and by integrating them into a novel framework.

For the access network regardless to the IP-BB, independent solutions can be used being optimized and adapted to the specific circumstances. Thus the invention proposes a network driven resource control framework.

According to a further aspect of the invention, it is proposed that the resource control mechanism is configured to determine the transmittable number of layers independent of the resources of the access network. Due to such a configuration, a maximum degree of flexibility can be achieved.

Moreover, it is proposed that the core network router is configured to periodically check the amount of data relating to the multilayered medium received and to generate a prune message to prune off the highest layer or a number of higher layers of the multilayered medium if data have been lost. As outlined above, the reaction time can be minimized if the prune function is implemented immediately in the core network router. The number of necessary prune messages can be minimized if the prune message is configured to comprise the addresses of multiple multicast groups to be pruned.

According to a further aspect of the invention, it is proposed that the core network router is configured to send the prune message to the neighboring upstream router of the core network. If the layer control is performed locally between neighboring routers, a highly flexible layer control with fast reaction times can be achieved, especially in comparison with control schemes having a centralized intelligence on either endpoint of the media flow. According to a further aspect of the invention, the core network router may forward a prune message received from a neighbouring downstream router to a neighbouring upstream router if all its downstream routers have pruned the group corresponding to the layer. Due to such a configuration, the feeding of unnecessary media layers may be avoided. Due to the local nature of the layer control, the solution is highly scalable.

A waste of bandwidth can be avoided if the core network router is configured to periodically check whether there is free bandwidth and to generate a join message to join a higher layer of the multilayered medium if free bandwidth is available. In particular, it is proposed that the core network router is configured to receive a join message and to register an appropriate output interface for the requested layer if the requested layer is not above the highest available layer of the upstream router. The messaging load can be kept small if the prune message and the join message are combined in a single message.

According to a further aspect of the invention, a method for operating a multicast network system for multicasting layered media via a core network to one or more receiving units in one or more access network is proposed. In the method according to the invention, a number of layers of the layered media are determined by a resource control method depending on available bandwidth resources of the multicast network system.

In order to achieve a particularly flexible resource control, it is proposed that the resource control method according to the invention controls the resources of the core network independent form the resources of the access network.

Moreover, it is proposed that the resource control method is based on feedback messages between neighbouring pairs of routers in the core network.

Among others, the invention proposes a system where the core and access networks can be separately optimized. The objects of the invention are achieved by a router-to-router feedback mechanism that restricts End-to-End (E2E) feedbacks to neighboring router pairs in the core network / IP-Backbone. The mechanism does not need receiver driven control nor periodical IGMP join/leave.

The mechanism is realized using a new message format the feedback mechanism.

Moreover, the invention proposes a de-centralized method proposed for controlling the number of forwarded layers. Due to the method according to the invention, the system provides the highest possible quality for each receiver/access network.

The method according to the invention is a network address translation based method to transparently connect core and access networks.

Further objects and advantages of the invention will become apparent from the attached description of a specific embodiment of the invention. The description and the figures show multiple advantageous features in combination, which will be appreciated by the skilled person individually and in further suitable combinations.

### 4. Brief description of the drawings

- Fig. 1: shows a Rendezvous-Point-Tree (RPT) of a multi-cast network system according to the invention.
- Fig. 2: shows a schematical representation of a resource control method for generating prune messages in the case of congestion according to a first scenario.
- Fig. 3: shows a schematical representation of a resource control method for generating prune messages in the case of congestion according to a second scenario.
- Fig. 4: shows a schematical representation of a resource control method for generating join message in the case free bandwidth is detected.
- Fig. 5: shows schematically an encapsulated PIM Local Join/Prune message in an IP packet.
- Fig. 6: shows schematically a possible message format of the local Join/Prune message.
- Fig. 7: shows schematically a connection between Access networks and IP backbones.

### 5. Detailed description of an Embodiment

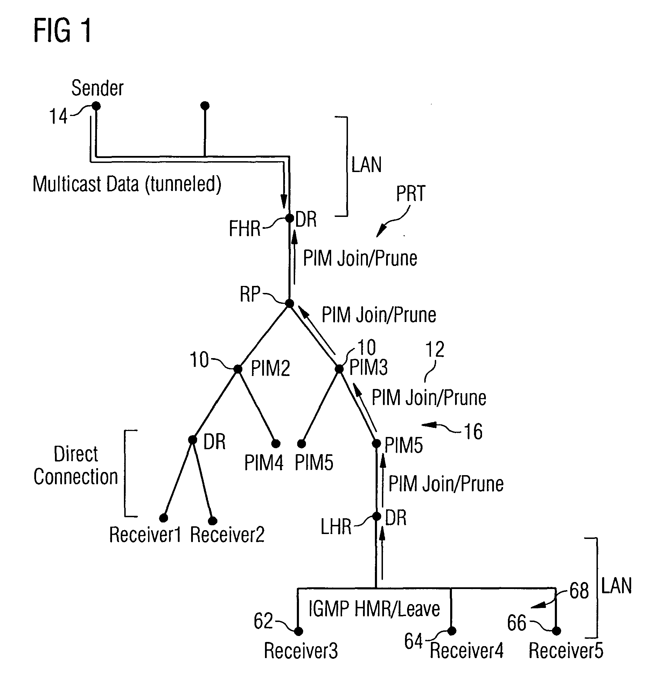

Figure 1 shows a schematically illustrated Rendezvous-Point-Tree (RPT) of a multicast network system according to the invention. The multicast network works on the basis of a Protocol Independent Multicast (PIM) protocol, which will be explained in the following.

The different versions of the Protocol Independent Multicast (PIM) protocol can be defined based on their "signaling density" as dense and sparse versions.

From some respects, the simpler version of the PIM protocol family is the Protocol Independent Multicast - Dense Mode (PIM-DM). As the name implies, this version of PIM is optimized for densely populated communities of users.

The most commonly implemented form of PIM is Protocol Independent Multicast - Sparse Mode (PIM-SM. This is the opposite of PIM-DM, since PIM-SM invokes a pull methodology instead of a push technique. This means that PIM-SM routers must specifically request a particular multicast stream before the data is forwarded to them. PIM-SM is well suited for the Internet, since PIM-SM reduces the overhead and bandwidth requirements of multicast data streams.

The PIM-SM protocol exists exclusively between routers 10. Hosts (sources or receivers) do not participate in the protocol. PIM-SM shares many of the common characteristics of a routing protocol, such as discovery messages, topology information, error detection and notification. PIM-SM also differs from traditional protocols, since PIM-SM does not participate in any kind of exchange of databases.

PIM-SM routers periodically generate HELLO messages to discover and maintain stateful sessions with neighbors. These messages are multicast using the dedicated address of the ALL-PIM-ROUTERS (224.0.0.13). After neighbors are discovered, PIM-SM routers can signal their will to join specific multicast groups. This is accomplished by having a downstream router send an explicit PIM-SM join message 12 (not to be confused with IGMP join messages) to the upstream router. The join message 12 will specify the group and the source (if applicable) that the router wants to join -- this can be denoted by (*,G1) or (S1,G1). Then the upstream routers 10 can forward multicast information to the downstream devices.

Like most other multicast routing protocols, PIM-SM implements forwarding trees as shown in Figure 1 for each multicast group. These trees are called Rendezvous Point Trees (RPTs), because they rely on a central router called a Rendezvous Point (RP). After a short period of time, these RPTs can be replaced by optimized Shortest Path Trees (SPTs).

In order to offload the majority of the routers, PIM-SM has centralized some of these functions by using the router called the RP. Each multicast group has its own RP that is responsible for forwarding information from the source to all of the receivers. In essence, the RP is the root of the RPTs.

Figure 1 shows an example of a typical RPT. The multicast source (the Sender) 14 on the left transmits data to the First Hop Router (FHR). The FHR knows the location of the RP for that particular group, so it will forward the data to the RP. The RP will be the root of the RPT, so the RP will distribute the multicast data to all of the registered receivers 10. Sources 14 do not necessarily register at their respective IGMP designated routers 10. Since sources 14 are often not receivers, this registration process is unnecessary. However, since the source is not registered at the Designated Router (DR), the First Hop Router (FHR) probably has not joined the RPT for that particular multicast group. In order to join the tree (which the FHR will use for transmitting data to the RP), the FHR will send a register message to the RP. The register message is a unicast message addressed directly to the RP. The multicast data from the source (including headers) is encapsulated in the register message so that the RP can forward the data while adding the source to the tree. These packets are called "register-encapsulated" packets and they continue until the RP sends a "register stop" message to the FHR. After receiving a register stop message from the RP, the FHR will continue to transmit standard multicast packets along the RPT.

When a Last Hop Router (LHR)/DR does not require the multicast data from a particular group, then this node sends a prune message to the RP. That router will be deleted from the RPT.

According to the invention, a specific resource control for the core networks / IP Backbones 16 for multicasting layered media is provided. The proposed solution controls the number of forwarded media layers in order to avoid long-term congestion and efficiently utilize the available bandwidth and is based on the Protocol Independent Multicast (PIM) protocol in the embodiment to be described below. The control is performed locally in the branches of the RPT.

According to the invention, knowledge about the quality properties of the layered media based on the cross-layer information provided by, e.g., Layer Independent Descriptor (LID) is incorporated in the PIM messaging. Therefore, fast and local adaptation can be performed in the IP Backbone 16 right at the place of the congestion.

The Layer Management according to the invention is implemented using special join/prune PIM messages 12 to be sent by a router 10 upstream (from Input Interface (iif) towards Sender 14/RP depending on the tree type). The actions to be done by the Layer Management are the prune of the not more needed layers and the join to new layers. The prune actions are triggered by congestion and the join actions are triggered by free bandwidth detection.

The proposed mechanism for layer management iteratively checks congestion and the free bandwidth between two neighboring multicast routers 10. In alternative embodiments of the invention, more sophisticated mechanisms can also be used in routers 10 to detect congestion or unused bandwidth. These more complex methods are needed if fairness towards other elastic traffic has to be addressed. However, the applicability of the proposed resource control for PIM-SM is not limited by the layer management procedures that are described below.

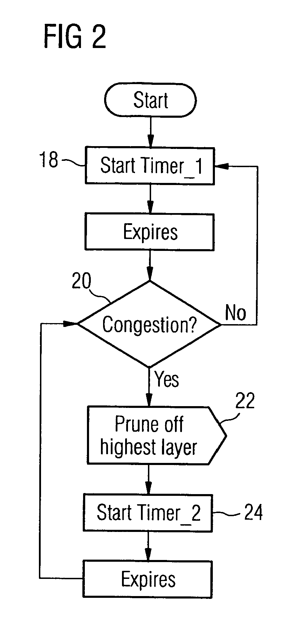

In the first scenario as schematically illustrated in Figure 2, a first Timer is launched in an initial step 18. When the first timer expires, it is checked whether there was congestion in a step 20. Congestion is assessed i.e. if there was drop-tail based packet loss. If there was loss, a prune signal is generated in a step 22 in order to prune off upstream the highest received layer in a prune-off step.

In a further step 24, a second timer is launched for detecting if further congestion exists. In the checking step 22, it is checked if congestion still exists. If there is still congestion, the program jumps to the prune-off step.

If on the other hand no further congestion is detected, the program jumps to the initial step 18 where the first timer is started. In favorable embodiments of the invention, the first timer has a greater expiration value than the second timer in order to avoid too frequent detection and to have faster adaptation period.

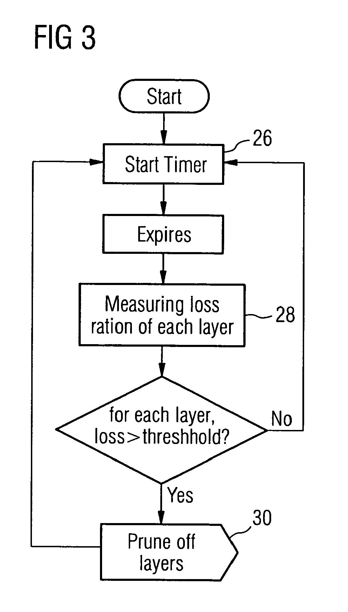

A second scenario is schematically illustrated in Figure 3. This scenario assumes that the router is aware of the dependencies of the layers of the given media stream. That is, the router knows which layer is more important and which has the least impact on the user-perceived quality. Also, the bandwidth requirement of each layer should to be known. Note, that this may need cross-layer signaled information. In the followings we assume that the router is aware of this information.

In an initial step 26, a timer is launched. When the timer expires, the total loss of the transmitted stream is calculated in a loss measuring step 28.

Depending on the result of the loss measurement, as many layers as necessary for eliminating the measured total loss are pruned off upstream in a step 30. The layers are pruned off with increasing priority from the least significant towards more significant layers. The method is repeated by reverting to the initial step 26.

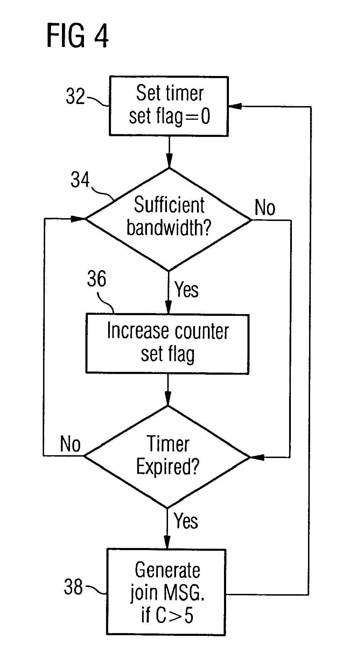

Figure 4 schematically shows a representation of a resource control method for generating join message 12 (Fig. 1) in the case free bandwidth is detected. The Layer management procedure is triggered by free bandwidth and is used increase the number of media layers in order to enhance the media quality.

In a first step 32, a timer is set and a flag indicating if a higher layer can be added. The flag value is zero at the launch of the timer.

If there is enough bandwidth detected in a step 34 for the next upcoming layer, the flag is set to the value 1. The sufficiency of the bandwidth can e.g. be assessed based on a probe of receiving the layer. If the current highest layer fits in the bandwidth twice, i.e., once more than currently, the bandwidth may be judged sufficient. However, other criteria for the assessment of free bandwidth may be applied in alternative embodiments.

In the decision algorithm given as an example below, a timer is set at time instance T to expire at T+t. Subsequently, the free bandwidth is checked, e.g., in every t/10 interval.

If there is free bandwidth - e.g. in the above defined sense - in the given time slot, a counter C is increased in a step 36. After the timer has expired, a new layer is added in a step 38 if C>5.

If the timer expires and the flag has the value 1 in step 38, then a join message 12 is generated and sent out on the Input Interface to the next upstream core network router 10, which is a PIM router.

If a downstream router requests a layer, which is not above the highest available layer of the upstream router, the upstream router 10 registers its appropriate Output Interface (oif) for the requested layer, from where the join was received to (*,G) or (S,G).

On the other hand, if the downstream router requests a layer which is above the highest available layer of the upstream router, the upstream router omits this request, because there must be congestion somewhere upstream since the upstream router has not got more layers provided by this mechanism automatically. As a consequence, there is no need to forward upstream the received join message 12.

In the following section, a new message type is introduced that is needed to prune off or join a layer in a router-to-router aspect. The new message is a PIM-SM message, the PIM Local Join/Prune message 12.

The PIM Local Join/Prune message 12 is for a router-to-router signaling valid only for one multicast hop. On one hand, the Local Join/Prune message 12 is used for reporting the upstream router 10 that congestion has detected, such that the output interface of the router 10, to which the corresponding group is forwarded, should be pruned.

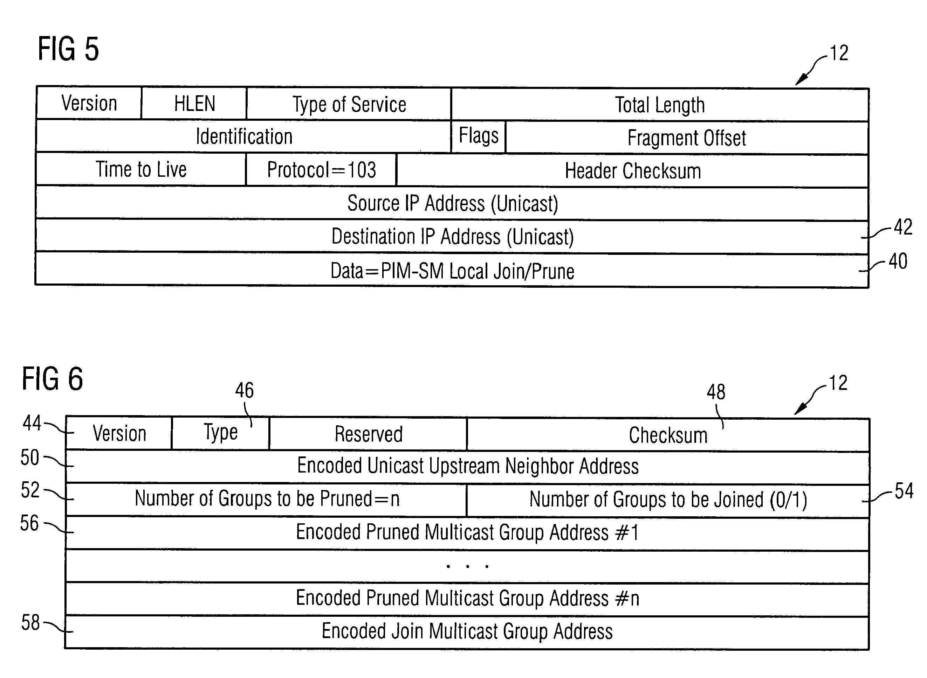

On the other hand, the Local Join/Prune message 12 is used to signal the upstream router 10 to forward the requested group(s) downstream to the appropriate output interface. In order to avoid signaling overhead, more than one group can be pruned at the same time according to the congestion-detection algorithm, but only one group can be requested in a join message 12. As a consequence, Local Join/Prune message 12 has suitable data structures to carry several groups to be pruned, however, only one group to be joined.
PIM-SM messages 12 are encapsulated in IP packets 40 (Fig. 5) with a protocol number set to 103 and the Local Join/Prune is a router-to-router one hop message. The Local Join/Prune messages are based on a standard join/prune message with IP Time-to-Live (TTL) field set to 1. The PIM routers In the Multicast Backbone (MB) / core network are not necessarily neighboring physically. As a consequence, the TTL field cannot be used for such purpose, a new type of message has to be defined. If a router receives a Local Join/Prune from one of its downstream PIM neighbor, it processes the message and drops it.

Figure 5 shows schematically an encapsulated PIM Local Join/Prune message 12 encapsulated in an Internet Protocol (IP) packet 40 according to one embodiment of the invention.

For a standard PIM control message, the IP packet's Destination Address is multicast, because there are messages that are sent to the ALL-PIM-ROUTERS (224.0.0.13) group. For Local Join/Prune messages 12 according to the invention, the destination address 42 is enough to be a unicast address: the address of the RP or the Sender 14 since these messages 12 are sent out at the appropriate interfaces only.

Figure 6 shows a possible message format of the Local Join/Prune message. The meaning of the fields (Version, Type, Reserved, Checksum) correspond to the standard PIM-SM version 2 packet header.

The PIM version number 44 is encoded as a 4 bit variable. The parameter "Type" 46 is a 4 bit number and denotes the particular control message. For Local PIM Join/Prune messages 12, the value can be, e.g., 6. The value needs an IANA registration. The checksum 48 contained in the PIM control message 12 is a 16 bit checksum of the entire PIM control message 12.

In the field "Encoded Unicast Upstream Neighbor Address" 50, a 32 bits address of the upstream neighbor router is stored. The format corresponds to the format used in standard PIM messaging. Moreover, the message contains the 16 bits Number of Groups to be Pruned 52. The latter number is the number of groups which are requested to be pruned by the router. Equally, the message contains the 16 bits Number of Groups to be Joined 54. The latter number is the number of groups which are requested to be joined by the router. Note that only 0 and 1 are valid values in this proposal, the rest is reserved.

The field "Multicast Group Addresses" 56 is a 32 bits address in the standard format used in PIM messaging. The fields contain the group addresses to be pruned in a list. Moreover, the message comprises a list 58 of "Encoded Join Multicast Group Addresses" in a 32 bits format. The latter list contains the group addresses for which the router wants to sign up.

In the following, a signaling within the multicast network is described.

If a PIM router notices that all its output interfaces for a given group is pruned i.e. if the output interface list for (*,G) or (S,G) fields is empty, then the PIM router sends out a Local Join/Prune message 12 to its upstream router 10, from which it received the stream for the corresponding group. The prune of a given group can spread up either to the Sender 14 or the RP depending on which tree type is used.

If a router 10 detects free bandwidth, then it sends a Local Join/Prune message 12 upstream in order to request the next layer from its upstream neighbor PIM router 10. This request means a join to the multicast group of the corresponding layer. If the layer is received by the upstream router 10, then the upstream router 10 adds the given output interface (towards the claimant) to the output interface list and starts forwarding packets. If the layer is not received by the upstream router 10, one of its links must be congested, otherwise it has already sent a not expired request upstream.

If the bandwidth detection algorithm uses short time intervals for measurement, then the join request will also be frequent. This might lead to unnecessary signaling overhead. In order to avoid this, a timer is started when the join request in the Local Join/Prune message 12 is sent out. The running of this timer indicates that the router is waiting for the requested layer, thus independently what the bandwidth detection algorithm says, the router requests no layer until expiration. Note, that with the appropriate choice of the bandwidth detection measurement interval, this latter timer may become unnecessary.

PIM-SM cannot guarantee that flows are routed to different groups on the same path. Different spanning trees for different groups can bring up the packet-ordering problem. Thus flows belonging to the same media must use the same RPT in order to avoid re-ordering. In embodiments where a SPT is used instead of RPT, the SPT is unique for a certain DR or Media Gateway (MG) and its receivers, as SPT is the shortest unicast path to the source.

The election of the RP routers is done by a Bootstrap Router (BSR). The RP advertises its IP address and the groups it can serve in a message to the BSR. The BSR collects this information and sends out a hop-by-hop Bootstrap Message (BSM) to all PIM routers in order to inform the network about towards which RP the join/leave messages should be forwarded for a given group. This helps the PIM routers to build up the RP tree for a given multicast group. In order to achieve this, the same RP serves all the subflows of a layered media. The RP is needed to be forced to advertise all the group addresses corresponding to the same media.

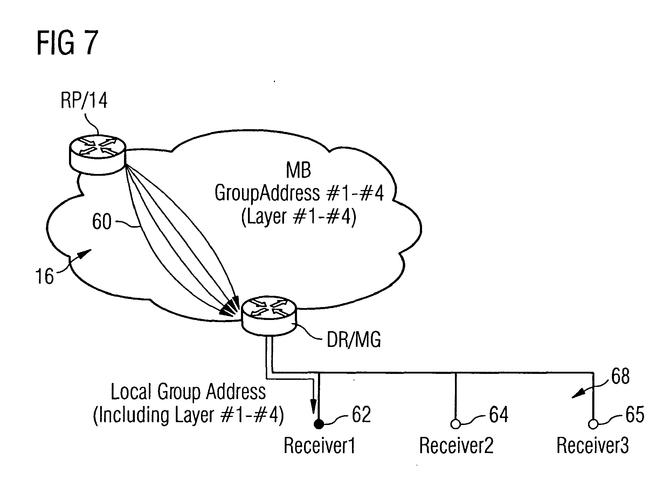

Figure 7 shows schematically how Access Networks (AN) and IP backbones 16 may be connected. In general, the connection between the users and the IP Backbone 16 can be of two types: direct access and through a Local Area Network (LAN) (cf. Fig. 1), wherein the latter type is more frequent.

At direct access receivers are not connected through a LAN to the DR. This means they are directly connected to the core network 16 via the leaf multicast router, the DR. In this case, all receivers handle their connections separately themselves.

In the following, a possible method to connect multicast receivers in a LAN to the IP-BB through a Media Gateway is described with reference to Figure 7. The LAN Access may include WLAN, 3GPP, DSL and other access methods.

The advantage of the proposed solution is that none of the receivers has to be aware of the multicast groups to be selected in order to receive a given media stream. This can be advantageous for example for a 3G or beyond 3G service provider. Only such multimedia contents and streams are advertised for third-party content providers with which the service provider has contract. Also, the service provider with the proposed solution can keep the incoming media traffic under control, meanwhile the proposed solution helps the billing process. However, this proposal on connecting ANs to IP-BBS does not exclude the possibility for the end-user to join explicitly to any third party content providers.

Receivers are connected to the MB through the leaf router (DR) of the multicast tree. The leaf node is the DR, which also acts as the MG. The DR runs the IGMP protocol routine, which translates IGMP join/leave requests to messages used in the multicast backbone 16 by the appropriate multicast routing protocol, e.g., the PIM-SM join/prune messages 12. In order to make the access layer distribution optimization easier, per-layer multicast groups belonging to the same media flow are mapped to a single local multicast group address. This enables the integration of cross-layer resource control applied in IP Backbone to the methods used in access networks. Lenghty joinleave procedures are avoided since only the multicast groups available at the leaf ends of the multicast tree (RPT) need to be considered.

The mapping of the multicast groups of each layer to a local one can be done by a simple Network Address Translation (NAT) in the MG. In case of WLAN, the MG can be the node in which most of the management functions are collected. In 3^{rd} Generation Partnership Project (3GPP), Digital Subscriber Loop (DSL) or in a simple Ethernet LAN scenario a similar node can take over the role of the MG.

In the example shown in Figure 7, the particular stream 60 consists of 4 layers each sent to a separate multicast group through the multicast backbone 16 to the DR/MG. The DR/MG acts as a receiver connected directly to the multicast core and hides the groups of receivers on the LAN from the Internet. The DR/MG performs the following address translation: GroupAddress#1, GroupAddress#2, GroupAddress#3 and GroupAddress#4 are delivered in the LAN to the LocalGroupAddress (known as Limited Scope Addresses, 239.X.X.X, that is similar to IP unicast 10.X.X.X addresses) for which e.g. the Receiver1 62 is signed up.

Note, by using this approach, none of the receivers 62 - 66 must be aware of the multicast group addresses of the layers of the selected media-flow. The DR/MG has this information and in the access network DR/MG informs the receivers 62 - 66 what media is available through itself. If any of the receivers 62 - 66 is interested in the available media, then those receivers 62 - 66 can join without knowing any technical detail of the flow being multicasted. To each media the DR/MG assigns a local group address and the receiver 62 - 66 should only sign up for that group by IGMP messages.

Also note, that for free ANs, such as WLAN, this method brings only the facility of easy and flexible connection from the user's side. On the other hand this connection scheme needs extra announcement methods from the networks side, that should be standardized in MGs used for such WLANs.

In an AN where the first receiver is willing to join to a specific media flow, the DR/MG initiates the join procedure for the IP-BB. The DR/MG is aware of the media's properties such as the number of layers, their group addresses, the address of RP or the sender itself and the required bandwidth of the layers. That is, the DR/MG router should send a bunch of join messages upstream to the RP/Sender towards the next PIM router. Each message corresponds to the layers of the media. As PIM-SM allows aggregating join/prune messages in order to avoid signaling overhead, these join messages can be sent out in a single message. Before the join procedure, the resource reservation can also be done, initiated by the DR/MG as well. As the DR/MG is also aware of the layer attributes, the bandwidth needs can also be aggregated into one single PATH message.

According to the invention, the optimization of layered media's multicast can be tailored to the IP-BB / core networks and access network separately by splitting up the E2E media delivery path into a core network part and into one or more access network parts. This eliminates limitations of current multicast congestion protocols.

Moreover, the proposed solution allows different numbers of multicast groups to be used for the same media in the core network and in the access network.

Further, in the proposed solution, none of the receivers 62 - 64 must be aware of the multicast group addresses of the selected media-flows' layers. Also, the service provider can keep the incoming media traffic from third-party content providers fully under control. This helps billing procedures as well.

Further, proposed solution is particularly transparent for the whole end-to-end delivery path including the media server and the end-users.

The proposed solution does not require receiver driven control nor periodical IGMP join/leave since the resource control functions are implemented in the core network. Each receiver/access network can get the media at the highest quality available due to the own nature of the system.

The solution according to the invention exploits the advantages of network driven resource control. Only the appropriate number of layers are injected into the branches of the multicast tree and congestion due to the injection of unnecessary layers may be avoided.

The above example is embodied is a protocol extension of PIM-SM. Since the PIM-SM is the de-facto multicast routing protocol, the extension has great influence on practice.

A further advantage of the invention is that based on cross-layer information, fast and local media adaptation can be performed while the solution according to the invention has a low complexity and can be implemented in a relatively simple way.

## Claims

1. Multicast network system comprising a core network (16) with at least one core network router (10), wherein the core network router (10) is configured to transmit a transmittable number of layers of at least one layered medium to at least one receiving unit (62, 64, 66) in an access network (68) connected to said core network (16), and further comprising a resource control mechanism for determining the number of layers depending on available bandwidth resources of the multicast network system, **characterized in that** said resource control mechanism is comprised by the core network (16).

2. Multicast network system according to claim 1, **characterized in that** said resource control mechanism is configured to determine the transmittable number of layers independent of the resources of the access network (68).

3. Multicast network system according to claim 2, **characterized by** means for resolving bandwidth resource limitations of the access network (68) by a media consumer joining another multicast group.

4. Multicast network system according one of the preceding claims, **characterized in that** the core network router (10) is configured to periodically check the amount of data relating the multilayered medium received and to generate a prune message (12) to prune off at least the highest layer of the multilayered medium if data have been lost.

5. Multicast network system according to claim 4, **characterized in that** said prune message (12) is configured to comprise the addresses (56) of multiple multicast groups to be pruned.

6. Multicast network system according to claim 4, **characterized in that** the core network router (10) is configured to send the prune message (12) to the neighboring upstream router (10) of the core network (16).

7. Multicast network system according to claim 6, **characterized in that** the core network router (10) is configured to forward a prune message (12) received from a neighboring downstream router (10) to a neighboring upstream router (10).

8. Multicast network system according to one of the preceding claims, **characterized in that** the core network router (10) is configured to periodically check whether there is free bandwidth and to generate a join message (12) to join a higher layer of the multilayered medium if free bandwidth is available.

9. Multicast network system according to one of the preceding claims, **characterized in that** the core network router (10) is configured to receive a join message (12) and to register an appropriate output interface for the requested layer if the requested layer is not above the highest available layer of the upstream router (10).

10. Multicast network system according to at least claims 4 and 8, **characterized in that** the prune message and the join message are combined in a single message (12).

11. Multicast network apparatus **characterized by** being configured for use in a multicast network system according to one of claims 1 - 10.

12. Method for operating a multicast network system for multicasting layered media via a core network (16) to one or more receiving units (62, 64, 66) in one or more access networks (68), wherein a number of layers of the layered media is determined by a resource control method depending on available bandwidth resources of the multicast network system, **characterized in that** said resource control method controls the resources of the core network independent form the resources of the access network (68).

13. Method according to claim 12, **characterized in that** said resource control method is based on feedback messages between neighboring pairs of routers (10) in the core network (16).

14. Method according to one of claims 12 and 13, **characterized in that** bandwidth resources limitations of the access network are resolved by a media consumer joining another multicast group.

15. Computer program product directly loadable into the internal memory of a service delivery apparatus, comprising software code portions for performing the method of one of the claims 11 to 13 when the product is run on a processor of the service delivery apparatus.
